# EUROPÄISCHE PATENTANMELDUNG

(11) **EP 1 247 903 A2**
(43) Veröffentlichungstag der Anmeldung: **09.10.2002**
(21) Anmeldenummer: 02090128.6
(22) Anmeldetag: 28.03.2002
(51) Int. Cl.: E01C 11/24, C08L 95/00, C09K 3/18

(54) **Bitumenemulsion sowie ihre Anwendung bei einem Verfahren zur Verhinderung winterlicher Glättebildung auf Verkehrsflächen**

(30) Priorität: 03.04.2001 DE 10117437
(71) Anmelder: Kämereit, Wilhelm, Dipl.-Ing., 40229 Düsseldorf (DE); CTW- Strassenbaustoffe AG, 4132 Muttenz 1 (CH)
(72) Erfinder: Kämereit, Wilhelm, Dipl-Ing., 40229 Düsseldorf (DE); Grimm, Claude, Dipl-Ing., 2935 Beurnevésin (CH)
(74) Vertreter: Meissner, Peter E., Dipl.-Ing.

(57) **Zusammenfassung**

Die Erfindung betrifft ein Verfahren zur Verhinderung winterlicher Glättebildung auf Verkehrsflächen, wobei auf die Verkehrsfläche eine Bitumenemulsion aufgespritzt wird, die ein Auftaumittel enthält, das nach der Trocknung der Emulsion in der Bitumen-Trockenmasse eingebettet verbleibt und nach und nach infolge der Versprödung des Bitumens bei sinkenden Temperaturen und sich dabei bildenden Mikrorissen und durch Abrieb unterstützt freigegeben wird.

## Beschreibung

Die Erfindung betrifft ein Verfahren zur Verhinderung winterlicher Glättebildung auf Verkehrsflächen sowie eine Bitumenemulsion zur Anwendung bei diesem Verfahren und ein Fahrzeug zur Ausbringung der Bitumenemulsion.

Es ist bekannt, bei aus den Witterungsverhältnissen heraus entstehenden Glättebilungserwartungen Salz zu streuen. Dieses Verfahren hat den Nachteil, dass nicht immer rechtzeitig und dabei verkehrsflächendeckend gestreut werden kann. Ausserdem besteht erfahrungsgemäß das Problem, dass bei zu frühzeitiger Streuung das Salz nicht an der Fahrbahn haftet und durch den rollenden Verkehr zu einem großen Teil von der Fahrbahn geweht wird, oder dass bei zu später Streuung ein Großteil des Streumittels zusätzlich für die Umwandlung des bereits entstandenen Glättepotentials (Schnee, Eis) in Wasser verbraucht wird, bevor es seinem eigentlichen Zweck, dem Verhindern einer Verbindung von Fahroberfläche mit dem Glättepotential, dient. Das ist ein ökonomischer und ökologischer Nachteil dieses derzeit überwiegend angewendeten Verfahrens.

Ferner ist es bekannt, dem Asphalt vor seinem Aufbringen als Fahrbahndeckschicht Salze zuzumischen, die den Gefrierpunkt an der Fahrbahnoberfläche um 2 bis 3°C herabsetzen. Dieses Verfahren ist sehr teuer und wird daher z.Zt. nur selten an örtlich begrenzten Fahrbahnabschnitten mit besonders häufigen winterlichen Verkehrsbeeinträchtigungen angewendet. Hinzu kommt bei diesem Verfahren noch eine Beeinträchtigung der Wirkintensität durch unterschiedliche Asphaltrezepturen.

Der Erfindung liegt die Aufgabe zugrunde, eine im Winterhalbjahr wirksame, in dieser Zeit permanent vorhandenen Wirkstoffmenge gegen winterliche Glättebildung auf Verkehrsflächen in besonders wirtschaftlicher Art und Weise an der Fahrbahnoberfläche zu positionieren.

Gelöst wird diese Aufgabe erfindungsgemäß mit den Merkmalen des Patentanspruchs 1.

Vorzugsweise Weiterbildungen und Einzelheiten der zur Anwendung kommenden Bitumenemulsion ergeben sich aus den Unteransprüchen bzw. den Ansprüchen 7 und 15.

Dieses erfindungsgemäße Verfahren beseitigt die vorstehend beschriebenen Nachteile und ist außerdem sehr wirtschaftlich. Erstaunlicherweise läßt sich in eine Bitumenemulsion mit 50M% Wasser soviel hydrophobiertes Salzmehl einmischen, dass die Trockenmasse an der Fahrbahnoberfläche mehr als 55M% Salz enthält. Weil diese Salz-Bitumen-Emulsion von hoher Lagerstabilität ist, einen sehr hohen Benetzungsgrad besitzt und eine niedrige Viskosität aufweist, kann sie problemlos in sehr dünnen Schichten, d.h.dünner als 0,3 mm aufgespritzt werden. Dadurch entsteht keine die Benutzbarkeit reduzierende Veränderung der allgemeinen Griffigkeit der behandelten Fahrbahnoberfläche. Die erfindungsgemäße Bitumenemulsion ist so "wasserbegierig", dass sie auch auf feuchte Oberflächen aufgespritzt werden kann, ohne dabei einen Haftverlust zu erleiden. Aufgebracht werden kann die erfindungsgemäße Bitumenemulsion mit einer im Prinzip serienmäßigen Spritzrampe, die beheizbar ist und deren Düsenkonstruktion auf die, im Vergleich mit den gängigen Einsatzanforderungen, sehr geringen Spritzmengen ausgerichtet ist. Außerdem soll sie über die Möglichkeit verfügen, in den Spritzvorgang eine Additivzugabe einbeziehen zu können. Dieses Additiv ist dazu vorgesehen, unter bestimmten Witterungsbedingungen den Trocknungsprozess an der Salzemulsionsoberfläche zu beschleunigen. Um zu verhindern, dass Strassenmarkierungen mit der schwarzen Emulsion überspritzt werden, können diese die entsprechenden Flächen abdeckenden Spritzdüsen - optisch gesteuert - ab- bzw. zugeschaltet werden.

Nachfolgend sollen Versuchsergebnisse beschrieben werden.
a) Es wurde eine kolloidale Emulsion aus 50M% Bitumen und 50M% Wasser, mit Bentonit als anorganischem Emulgator und Ligninsulfonat als Dispergierhilfsmittel, hergestellt.
b) NaCl wurde auf eine durchschnittliche Mahlfeinheit von 63 µm zerkleinert und mit Mg-Stearat (4M% bezogen auf NaCI) hydrophobiert.
c) im Verhältnis 40M% zu 60M% wurde das hydrophobierte Salzmehl mit der Bitumenemulsion gemischt.
d) Nach einer Lagerzeit von 12 Wochen wurde die Salz-Bitumen-Emulsion auf eine Asphaltoberfläche gespritzt und zwar mit einer Menge von 275 g/m².

Es zeigte sich, dass die Bitumenemulsion - unabhängig vom pH-Wert - an der Asphaltoberfläche sehr gut haftete, dass sie ortsfest blieb und sich nicht in Vertiefungen sammelte und dass keine Salzausblühungen auftraten. Das Vorhandensein des Salzes konnte leicht mit der gängigen Anwendung von Silbernitrat nachgewiesen werden. Betrachtungen unter einem Mikroskop zeigen, dass in der Trockenmasse die Salzkörper in der Bitumenmasse gleichmäßig eingebettet vorlagen.

Es zeigte sich auch, dass die Trocknungszeit der aufgespritzten Salz-Bitumen-Emulsion abgekürzt werden kann, wenn die Emulsion auf 80°C erwärmt wird und/oder wasseraufnehmende Additive - wie z.B. Ton, der durch Verwitterung vulkanischer Aschen entstanden ist (Bentonit) und/oder beispielsweise Kopolymere VME-MA (Vinylmethyläther-Maleinsäureanhydrit)- zusammen mit der Emulsion aufgebracht werden.

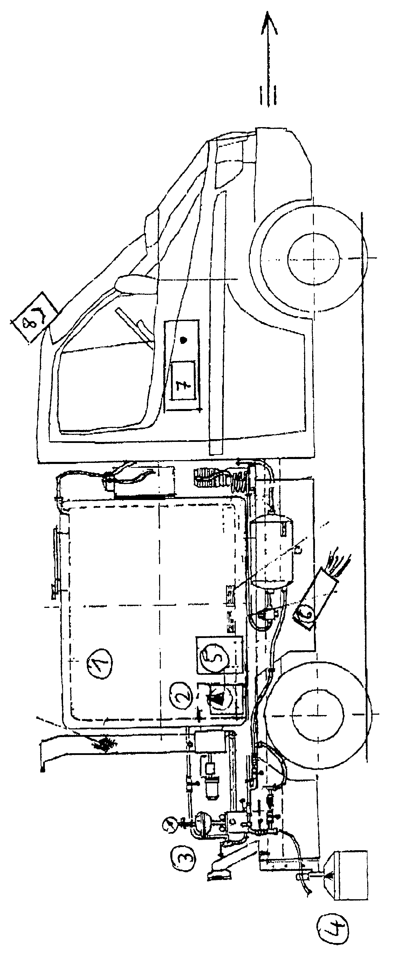

In der Figur ist ein Ausführungsbeispiel für ein Fahrzeug dargestellt, mit dem die Bitumenemulsion ausbringbar ist.

Dieses Fahrzeug weist einen mit einer Heizung versehenen Tank 1 zur Aufnahme der Bitumenemulsion auf. Mit dem Tank 1 ist ein Pumpenaggregat 2 verbunden, an das ein mit einem Dosiersystem versehenes Rohrsystem 3 angeschlossen ist, und zwar derart, dass auch die Zugabe von Additiven in die Emulsion zur Verbesserung der Trocknung möglich ist. Die Ausbringung der Bitumenemulsion erfolgt über einen Spritzbalken 4, der vorteilhafterweise mit einer Einzeldüsenschaltung und einer Einrichtung zur Veränderung der Spritzbreite ausgerüstet ist. Außerdem können noch zusätzlice Spritzdüsen zum Spritzen eines Trocknungsmittels auf den Bitumenspritzfilm vorgesehen sein. Die Steuerung für den Spritzbalken ist mit 5 angedeutet. Weitere Einzelheiten sind ein Wegmesssystem 6, beispielsweise ein Radar, eine im Fahrzeugführerhaus angeordnete Auswerteelektronik mit Monitor 7 und ein Aufnahmesystem 8 für die Straßenoberfläche.

## Patentansprüche

1. Verfahren zur Verhinderung winterlicher Glättebildung auf Verkehrsflächen,
**dadurch gekennzeichnet,**
**dass** auf die Verkehrsfläche eine Bitumenemulsion aufgespritzt wird, die ein Auftaumittel enthält, das nach der Trocknung der Emulsion in der Bitumen-Trockenmasse eingebettet verbleibt und nach und nach infolge der Versprödung des Bitumens bei sinkenden Temperaturen und sich dabei bildenden Mikrorissen und durch Abrieb unterstützt freigegeben wird.

2. Verfahren nach Anspruch 1,
**dadurch gekennzeichnet,**
**dass** die Bitumenemulsion in einer Menge zwischen 100 und 400 g/m² auf die Verkehrsfläche aufgetragen wird.

3. Verfahren nach einem der vorstehenden Ansprüche,
**dadurch gekennzeichnet,**
**dass** der in der Trockenmasse verbleibende Auftaumittelanteil 50M% übersteigt.

4. Verfahren nach einem der vorstehenden Ansprüche,
**dadurch gekennzeichnet,**
**dass** das Auftaumittel ein Salz ist.

5. Verfahren nach einem der vorstehenden Ansprüche,
**dadurch gekennzeichnet,**
**dass** der Bitumenemulsion vor dem Aufspritzen Additive zugegeben werden.

6. Verfahren nach einem der vorstehenden Ansprüche,
**dadurch gekennzeichnet,**
**dass** die Bitumenemulsion vor dem Aufspritzen erwärmt wird.

7. Bitumenemulsion zur Anwendung bei dem Verfahren nach den vorstehenden Ansprüchen,
**dadurch gekennzeichnet,**
**dass** sie aus Bitumen, Wasser, einem Emulgator, einem Dispergierhilfsmittel sowie einem Auftaumittel besteht.

8. Bitumenemulsion nach Anspruch 7,
**dadurch gekennzeichnet,**
**dass** das Auftaumittel NaCI ist.

9. Bitumenemulsion nach einem der vorstehenden Ansprüche,
**dadurch gekennzeichnet,**
**dass** als Emulgator Bentonit verwendet wird.

10. Bitumenemulsion nach einem der vorstehenden Ansprüche,
**dadurch gekennzeichnet,**
**dass** das Dispergierhilfsmittel Ligninsulfonat ist.

11. Bitumenemulsion nach einem der vorstehenden Ansprüche,
**dadurch gekennzeichnet,**
**dass** das Auftaumittel hydrophobiert ist.

12. Bitumenemulsion nach Anspruch 11,
**dadurch gekennzeichnet,**
**dass** das Hydrophobierungsmittel ein Stearat, insbesondere Magnesiumstearat ist.

13. Bitumenemulsion nach einem der vorstehenden Ansprüche,
**dadurch gekennzeichnet,**
**dass** das Auftaumittel in einer Körnung vorliegt, die 80µm, bevorzugt 60µm, besonders bevorzugt 30µm nicht übersteigt.

14. Fahrzeug zur Durchführung des Verfahrens und zum Ausbringen der Bitumenemulsion nach einem der vorstehenden Ansprüche, mit einem mit einer Heizung versehenen Tank (1) zur Aufnahme der Bitumenemulsion, einem mit diesem verbundenen Pumpenaggregat (2), an das ein mit einem Dosiersystem versehenes Rohrsystem (3) angeschlossen ist, das wiederum mit einem Spritzbalken (4) zur Ausbringung der Bitumenemulsion verbunden ist.

15. Fahrzeug nach Anspruch 14,
**dadurch gekennzeichnet,**
**dass** der Spritzbalken (4) einer Einzeldüsenschaltung und einer Einrichtung zur Veränderung der Spritzbreite ausgerüstet ist.

16. Fahrzeug nach einem der vorstehenden Ansprüche,
**dadurch gekennzeichnet,**
**dass** es mit einem Wegmesssystem (6), einer im Fahrzeugführerhaus angeordnete Auswerteelektronik mit Monitor (7) und einem Aufnahmesystem (8) für die Straßenoberfläche ausgerüstet ist.

17. Fahrzeug nach einem der vorstehenden Ansprüche,
**dadurch gekennzeichnet,**
**dass** das Rohrsystem (3) mit Einrichtungen verbunden ist, mittels der Additive einspeisbar sind.

18. Fahrzeug nach eine der vorstehenden Ansprüche,
**dadurch gekennzeichnet,**
**dass** am Spritzbalken (4) zusätzliche Spritzdüsen angeordnet sind, mittels der ein Trocknungsmittel auf den Bitumenspritzfilm aufbringbar ist.
